# FASCICULE DE BREVET EUROPEEN

(11) **EP 4 045 201 B1**
(45) Date de publication et mention de la délivrance du brevet: **06.09.2023**
(21) Numéro de dépôt: 20789161.5
(22) Date de dépôt: 14.10.2020
(51) Int. Cl.: B09B 3/00, B02C 19/00, B24B 41/00, B24B 41/02, B02C 18/12

(54) **DISPOSITIF POUR LA BANALISATION DE DÉCHETS**
VORRICHTUNG ZUR SICHERUNG VON ABFÄLLEN
WASTE TREATMENT APPARATUS

(30) Priorité: 16.10.2019 FR 1911564
(43) Date de publication de la demande: 24.08.2022
(73) Titulaire: Bertin Technologies, 78180 Montigny-le-Bretonneux (FR)
(72) Inventeur: ROCH, Jean, 13109 Simiane-Collongue (FR); BESNARD, Jacques, 78370 Plaisir (FR); SENTENAC, Thibault, 78180 Montigny-le-Bretonneux (FR); LORECKI, Boguslaw, 13850 Greasque (FR)
(74) Mandataire: Hautier IP
(86) Numéro de dépôt international: PCT/EP2020/078858
(87) Numéro de publication internationale: WO 2021/074200

(56) Documents cités:
- EP-A1- 2 174 673
- CN-U- 202 684 653
- CN-U- 205 009 023
- RU-C1- 2 604 005

## Description

### DOMAINE TECHNIQUE

La présente invention concerne le domaine de la banalisation de déchets d'activités de soins à risques infectieux, appelés DASRI. La présente invention concerne en particulier un dispositif de banalisation de déchets.

### ÉTAT DE LA TECHNIQUE

Il existe de très nombreux broyeurs DASRI dans l'art antérieur. Ces broyeurs comprennent un système de broyage mécanique et un système de chauffage des déchets afin de les stériliser.

Le brevet EP-2174673A montre un état de la technique connu.

Une des principales problématiques de ce type de dispositif sont les vibrations mécaniques que subit le dispositif lorsque les déchets sont broyés dans la cuve. Ce broyage entraîne des vibrations mécaniques importantes au niveau de la cuve et qui se propage à tout le dispositif. Ces vibrations entraînent bien souvent des problèmes d'entretien, de fiabilité et de sécurité pour le dispositif, et des nuisances sonores.

Dans l'art antérieur, sont proposés des patins disposés au sol et destinés à supporter le dispositif et à réduire la transmission des vibrations. Toutefois, de nombreuses problématiques ne sont pas résolues et obligent bien souvent à réduire la taille des cuves, la quantité de déchets à broyer ou bien encore la vitesse de rotation des lames pour ne pas créer un balourd trop important.

Un objet de la présente invention est donc de proposer une solution à ce problème de vibrations mécaniques.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

La présente invention concerne un dispositif de traitement de déchets, en particulier de banalisation de déchets d'activités de soins à risques infectieux, comprenant une cuve destinée à être alimentée en déchets, un broyeur de déchets monté en partie au moins à l'intérieur de la cuve, un système de chauffage des déchets en vue de leur désinfection, et une structure porteuse, caractérisé en ce que la cuve est suspendue à la structure porteuse par des plots de suspension configurés pour supporter la cuve, la structure porteuse comprenant :
- au moins trois plots de suspension supérieurs comprenant chacun au moins un organe de suspension, étant répartis à équidistance angulaire les uns des autres autour de la cuve et étant reliés à la cuve à un premier niveau en hauteur de la cuve;
- au moins trois plots de suspension inférieurs comprenant chacun au moins un organe de suspension, étant répartis à équidistance angulaire les uns des autres autour de la cuve et étant reliés à la cuve à un deuxième niveau en hauteur de la cuve, différent du premier niveau.

La présente invention permet de réduire, voire d'annuler, la transmission des vibrations mécaniques de la cuve au reste du dispositif.

En effet, de manière particulièrement avantageuse, la configuration et le positionnement des plots de suspensions assurent une très forte réduction, voire une annulation, de la transmission des vibrations mécaniques de la cuve à la structure porteuse.

Le positionnement des plots de suspension à deux niveaux en hauteur de la cuve et la répartition à équidistance angulaire par niveau en hauteur de la cuve.

La présente invention permet également un maintien en position isostatique de la cuve en répartissant les plots de suspensions autour de la cuve. Ce maintien est renforcé par la disposition sur deux niveaux en hauteur desdits plots de suspension. Cela permet également d'éviter le basculement de la cuve.

La présente invention concerne également une structure porteuse destinée à suspendre une cuve d'un dispositif selon la présente invention, comprenant trois potences, chaque potence comprenant au moins deux bases de liaison à hauteurs différentes l'une de l'autre, chaque base de liaison étant destinée à accueillir un plot de suspension, chaque plot de suspension comprenant un organe de suspension solidaire de ladite cuve.

Avantageusement, le broyeur, et de préférence le moteur actionnant le broyeur, sont montés sur, de préférence portés par, la cuve.

Avantageusement, le système de chauffage est monté sur, de préférence porté par, la cuve.

Avantageusement, l'instrumentation de la présente invention est montée sur, de préférence porté par, la cuve.

Selon un mode de réalisation, la structure porteuse comprend un système triangulaire mécanique comprenant des éléments de solidarisation configurés pour solidariser chacune des potences entre elles.

La présente invention concerne aussi des guides de liaison destinés à être montés fixe sur une cuve d'un dispositif selon la présente invention et sur une base de liaison d'une potence d'une structure porteuse selon la présente invention, lesdits guides de liaison comprenant des orifices destinés au passage d'un câble métallique.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une vue de dessus schématique du positionnement de trois plots de suspension inférieurs selon un mode de réalisation de la présente invention.
La figure 2 représente une vue de dessus schématique du positionnement de trois plots de suspension supérieurs selon un mode de réalisation de la présente invention.
La figure 3 est une représentation schématique d'une structure porteuse selon un mode de réalisation de la présente invention.
La figure 4 représente une vue du dessous d'une cuve selon un mode de réalisation de la présente invention.
La figure 5 représente une vue en coupe d'une cuve selon un mode de réalisation de la présente invention.
La figure 6 représente un dispositif de traitement de déchets selon un mode de réalisation de la présente invention.
La figure 7 représente un agrandissement d'un plot de suspension supérieur selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- Selon un mode de réalisation, chacun des plots de suspension supérieurs est disposé au-dessus, de préférence à l'aplomb, d'un des plots de suspension inférieurs définissant des paires de plots de suspension, chaque paire de plots de suspension étant formée d'un plot de suspension supérieur et d'un plot de suspension inférieur, le plot de suspension supérieur étant disposé au-dessus, de préférence à l'aplomb, du plot de suspension inférieur.
   Cela permet de limiter l'hyperstatisme de la liaison de la cuve en renforçant la tenue mécanique, par répartition des charges, en réalisant des paires de plots de suspensions sur deux niveaux en hauteur de la cuve.
- Selon un mode de réalisation, le plot de suspension supérieur et le plot de suspension inférieur de chaque paire de plots de suspension s'étendent chacun selon un axe d'extension différent, de préférence orthogonal l'un par rapport à l'autre.
   Cela permet une réactivité mécanique complémentaire de chaque membre d'une paire de plots de suspension.
   Cela permet d'amortir les vibrations mécaniques de la cuve selon plusieurs composantes vectorielles, de préférence selon des composantes radiales et des composantes tangentielles relativement à la cuve.
- Selon un mode de réalisation, pour chaque paire de plots de suspension, le plot de suspension supérieur et le plot de suspension inférieur présentent des constantes de raideur identiques l'un de l'autre.
- Selon un autre mode de réalisation, pour chaque paire de plots de suspension, le plot de suspension supérieur et le plot de suspension inférieur présentent des constantes de raideur différentes l'un de l'autre.
   Cela permet de corréler les constantes de raideur des plots de suspension supérieurs et inférieurs avec leur position relativement au broyeur, voire même au moteur actionnant le broyeur, cela afin de compenser au mieux les vibrations.
   En particulier, les plots suspension inférieurs sont plus proche du fond de la cuve et donc du balourd, tandis que les plots de suspension supérieurs sont eux plus éloignés du fond de la cuve et donc du balourd.
   Ainsi pour un amortissement uniforme des vibrations mécaniques par les plots de suspension, la constante de raideur moyenne des plots de suspension supérieurs peut être différente, et de préférence inférieure, à la constante de raideur moyenne des plots de suspension inférieurs.
- Selon un mode de réalisation, les constantes de raideurs verticales des plots de suspension supérieurs sont comprises entre 1 N/mm et 50 N/mm, de préférence entre 1.5 N/mm et 45 N/mm et avantageusement entre 2 N/mm et 42 N/mm, et les constantes de raideurs verticales des plots de suspension inférieurs sont comprises entre 1 N/mm et 50 N/mm, de préférence entre 1.5 N/mm et 45 N/mm et avantageusement entre 2 N/mm et 42 N/mm.
- Selon un mode de réalisation, les constantes de raideurs horizontales des plots de suspension supérieurs sont comprises entre 6 N/mm et 15 N/mm, de préférence entre 7 N/mm et 12 N/mm et avantageusement entre 8 N/mm et 11 N/mm, et les constantes de raideurs horizontales des plots de suspension inférieurs sont comprises entre 6 N/mm et 15 N/mm, de préférence entre 7 N/mm et 12 N/mm et avantageusement entre 8 N/mm et 11 N/mm.
- Selon un mode de réalisation, le rapport entre la constante de raideur d'un des plots de suspension supérieurs et la constante de raideur d'un des plots de suspension inférieurs est inférieur à 3, de préférence à 2, et avantageusement égal à 1.
- Selon un mode de réalisation, la cuve comprend un axe longitudinal et les plots de suspension supérieurs sont plus éloignés de l'axe longitudinal de la cuve que les plots de suspension inférieurs.
   Cela permet de disposer au plus près de la base de la cuve les plots de suspension inférieurs. En effet, c'est au plus bas de la cuve que ce situe le maximum de l'intensité vibratoire de la cuve de par la présence au fond de la cuve du système de broyage généralement rotatif. Ainsi, en approchant les plots de suspension inférieurs de cette zone vibratoire, le maintien en position isostatique de la cuve est amélioré.
- Selon un mode de réalisation, l'au moins un organe de suspension de chacun des plots de suspension supérieurs comprend au moins un câble métallique. Cela permet aisément de configurer la constante de raideur des organes de suspension via le choix des matériaux et du diamètre du câble métallique.
- Selon un mode de réalisation, le câble métallique présente une forme hélicoïdale s'étendant selon un premier axe d'enroulement.
   Cela permet de disposer d'une direction privilégiée de déformation de l'organe de suspension en fonction de l'orientation spatiale de l'axe d'enroulement relativement à la cuve.
- Selon un mode de réalisation, la cuve comprend un axe longitudinal et le premier axe d'enroulement est orthogonal à l'axe longitudinal de la cuve.
- Selon un mode de réalisation, l'au moins un organe de suspension de chacun des plots de suspension inférieurs comprend au moins un câble métallique.
- Selon un mode de réalisation, le câble métallique présente une forme hélicoïdale s'étendant selon un deuxième axe d'enroulement.
   Cela permet de disposer d'une direction privilégiée de déformation de l'organe de suspension en fonction de l'orientation spatiale de l'axe d'enroulement relativement à la cuve.
- Selon un mode de réalisation, la cuve comprend un axe longitudinal le deuxième axe d'enroulement est orthogonal à l'axe longitudinal de la cuve. Cela permet une complémentarité entre les déformations privilégiées de chaque niveau de plots de suspension. En effet, les plots de suspension inférieurs présentent une direction de déformation privilégiée orthogonale à la direction de déformation privilégiée des plots de suspension supérieurs.
- Selon un mode de réalisation, le deuxième axe d'enroulement s'étend radialement relativement à l'axe longitudinal de la cuve.
   Cela permet de disposer au niveau de la zone vibratoire de plus haute intensité d'organes de suspension configurés pour avoir une déformation privilégiée selon la direction principale desdites vibrations, par exemple selon un direction radiale par rapport à l'axe de rotation de la lame du broyeur.
- Selon un mode de réalisation, le premier axe d'enroulement est orthogonal au deuxième axe d'enroulement.
- Selon un mode de réalisation, la structure porteuse comprend uniquement trois plots de suspension supérieurs et uniquement trois plots de suspension inférieurs.
   Cela permet un maintien dans une position isostatique sans surcharger la structure porteuse tout en réduisant le coût de fabrication du dispositif.
- Selon un mode de réalisation, un plot de suspension supérieur parmi les trois plots de suspension supérieurs présente un nombre de spire différent des du nombre de spires des autres plots de suspension supérieurs.
- Selon un mode de réalisation, un plot de suspension supérieur comprend 4 spires et les autres plots de suspension supérieurs comprennent 3 spires.
- Selon un mode de réalisation, un plot de suspension supérieur parmi les trois plots de suspension supérieurs présente une constante de raideur différente des constantes de raideur des autres plots de suspension supérieurs.
   Cela permet de contrebalancer la présence du moteur entraînant le broyeur. En effet, dans le cas où le moteur est porté par la cuve son poids est à considérer dans l'étude des modes et déplacements vibratoires de la cuve. Aussi il peut être intéressant qu'un des plots de suspension supérieurs présente une constante de raideur différente, par exemple supérieur, et de préférence que ce plot de suspension supérieur soit diamétralement opposé au moteur.
- Selon un mode de réalisation, le rapport entre la constante de raideur verticale dudit plot de suspension supérieur parmi les trois plots de suspension supérieurs et les constantes de raideur desdits autres plots de suspension supérieurs est supérieur à 1, de préférence à 1.25, et avantageusement à 1.3.
- Selon un mode de réalisation, le rapport entre la constante de raideur horizontale dudit plot de suspension supérieur parmi les trois plots de suspension supérieurs et les constantes de raideur desdits autres plots de suspension supérieurs est supérieur à 1, de préférence à 1.25, et avantageusement à 1.3.
- Selon un mode de réalisation, un plot de suspension inférieur parmi les trois plots de suspension inférieurs présente une constante de raideur différente des constantes de raideur des autres plots de suspension inférieurs.
   Cela permet de contrebalancer la présence du moteur entraînant le broyeur. En effet, dans le cas où le moteur est porté par la cuve son poids est à considérer dans l'étude des modes et déplacements vibratoires de la cuve. Aussi il peut être intéressant qu'un des plots de suspension inférieurs présente une constante de raideur différente, par exemple supérieur, et de préférence que ce plot de suspension inférieur soit diamétralement opposé au moteur.
- Selon un mode de réalisation, un plot de suspension inférieur parmi les trois plots de suspension inférieurs présente un nombre de spire différent des du nombre de spires des autres plots de suspension inférieurs.
- Selon un mode de réalisation, un plot de suspension inférieur comprend 4 spires et les autres plots de suspension inférieurs comprennent 3 spires.
- Selon un mode de réalisation, le rapport entre la constante de raideur verticale dudit plot de suspension inférieur parmi les trois plots de suspension inférieurs et les constantes de raideur desdits autres plots de suspension inférieurs est supérieur à 1, de préférence à 1.25, et avantageusement à 1.3.
- Selon un mode de réalisation, le rapport entre la constante de raideur horizontale dudit plot de suspension inférieur parmi les trois plots de suspension inférieurs et les constantes de raideur desdits autres plots de suspension inférieurs est supérieur à 1, de préférence à 1.25, et avantageusement à 1.3.
- Selon un mode de réalisation, le dispositif comprend un moteur configuré pour actionner ledit broyeur et destiné à être supporté par ladite cuve, ledit moteur étant diamétralement opposé à au moins l'un parmi les trois plots de suspension supérieurs et les trois plots de suspension inférieurs, de préférence opposé à un plot de suspension supérieur ayant une constante de raideur différente desdits autres plots de suspension supérieurs et/ou à un plot de suspension inférieur ayant une constante de raideur différente desdits autres plots de suspension inférieurs.
   Cela permet de compenser le désaxage vibratoire de la cuve, c'est-à-dire le désalignement de son centre de gravité d'avec son axe longitudinal, dû au fait que le moteur est porté par la cuve.
- Selon un mode de réalisation, les constantes de raideur des organes de suspension des plots de suspension supérieurs et des plots de suspension inférieurs sont configurées pour que la fréquence de résonnance de chaque organe de suspension soit différente de la fréquence de vibration de la cuve lorsque le broyeur de déchets est actif.
   Cela permet de réduire la transmission des vibrations mécaniques depuis la cuve vers la structure porteuse.
- Selon un mode de réalisation, les plots de suspension supérieurs et les plots de suspension inférieurs sont déformables élastiquement selon les trois dimensions de l'espace.
   Cela permet d'amortir spatialement l'ensemble vibrations de la cuve indépendamment de leurs directions spatiales.
- Selon un mode de réalisation, chaque plot de suspension comprend au moins un guide de liaison inférieur et un guide de liaison supérieur comprenant chacun une pluralité d'orifices destinés à accueillir en partie au moins un câble métallique formant en partie au moins ledit organe de suspension.
   Cela permet de conformer au besoin le câble métallique afin de lui donner plus ou moins de raideur par exemple.
- Selon un mode de réalisation, le guide de liaison supérieur est solidaire à une partie au moins de la cuve et le guide de liaison inférieur est solidaire à une partie au moins de la structure porteuse.
- Selon un mode de réalisation, le dispositif comprend une couronne disposée au premier niveau en hauteur de la cuve et les guides de liaison supérieurs des plots de suspensions supérieurs sont solidaires de ladite couronne.
- Selon un mode de réalisation, les guides de liaison supérieurs des plots de suspensions supérieurs sont solidaires de la surface inférieure de ladite couronne.
- Selon un mode de réalisation, la configuration du câble métallique dans la pluralité d'orifices définit en partie au moins la constante de raideur de l'organe de suspension.

La présente invention concerne un dispositif de traitement de déchets, en particulier de banalisation de déchets d'activités de soins à risques infectieux, autrement appelés DASRI.

Selon un mode de réalisation de la présente invention, le dispositif de traitement de déchets comprend une cuve. Cette cuve est destinée à recevoir les déchets à traiter. De préférence, ladite cuve comprend un couvercle configuré pour présenter une position ouverte permettant l'introduction des déchets et/ou leur extraction, et une position fermée. Selon un mode de réalisation préféré, mais non limitatif, ledit couvercle peut être actionné électroniquement d'une position à l'autre au moyen par exemple d'un système hydraulique piloté.

Selon un mode de réalisation, le dispositif de traitement de déchets comprend un broyeur. Ce broyeur comprend avantageusement au moins une lame, de préférence deux lames rotatives autour d'un axe de rotation. Cette lame rotative est avantageusement disposée dans la cuve. De préférence, cette lame rotative est positionnée au fond de la cuve. Avantageusement, l'axe de rotation de la lame rotative est colinéaire à l'axe longitudinal de la cuve. Le broyer est avantageusement configuré pour broyer les déchets à traiter. Selon un mode de réalisation, la cuve porte en partie, de préférence intégralement, ledit broyeur.

Selon un mode de réalisation, le dispositif de traitement de déchets comprend au moins un moteur. De préférence, ledit moteur est configuré pour alimenter mécaniquement ledit broyeur. Par exemple, ledit moteur entraîne en rotation la lame rotative autour de son axe de rotation. Cet entraînement peut être réalisé au travers d'une courroie d'entraînement par exemple. Selon un mode de réalisation préféré, la cuve supporte en partie au moins, et de préférence intégralement, ledit moteur.

Avantageusement, ledit moteur est configuré pour entrainer en rotation la lame rotative autour de son axe de rotation selon deux sens de rotation contraires.

Selon un mode de réalisation, le dispositif de traitement de déchets comprend un système de chauffage. Ledit système de chauffage est avantageusement configuré pour désinfecter les déchets à traiter, de préférence pendant leur broyage, avantageusement pendant tout le cycle de traitement des déchets. Ledit système de chauffage comprend avantageusement un générateur de micro-ondes. De préférence, la cuve supporte en partie au moins, et avantageusement en intégralité, ledit système de chauffage.

Selon un mode de réalisation, le dispositif de traitement de déchets comprend une structure porteuse. Cette structure porteuse est de préférence configurée pour porter la cuve, ainsi que de préférence le broyeur, le moteur et le système de chauffage. Cette structure porteuse sera décrite plus précisément par la suite.

La cuve a avantageusement un corps ayant une forme cylindrique délimitée par un fond, avantageusement plan, et par une paroi latérale, de préférence de section circulaire. Cette forme géométrique délimite un volume intérieur, de préférence cylindrique de révolution, recevant les déchets.

On notera que dans l'art antérieur ce type de dispositif représente généralement une source de vibrations mécaniques importantes. Ces vibrations sont une source aussi bien de gêne que de problématiques d'entretien et de fiabilité. En effet, lorsque les déchets sont disposés dans la cuve et que le broyeur est activé, la lame rotative broie les déchets en tournoyant provoquant ainsi la formation d'un balourd dont les oscillations provoquent de fortes contraintes mécaniques et de violentes vibrations.

De plus, dans l'art antérieur, le fait que la cuve supporte le moteur, le système de chauffage et le broyeur augmente d'autant plus l'amplitude de ces vibrations.

La présente invention solutionne en partie au moins ces problématiques en proposant un dispositif dont la structure porteuse supporte ladite cuve au travers de plots de suspension répartis de préférence sur au moins deux niveaux en hauteur, distincts, selon l'axe longitudinal de la cuve.

En effet, de manière astucieuse, et selon un mode de réalisation de la présente invention, la structure porteuse comprend au moins trois plots de suspension supérieurs et au moins trois plots de suspension inférieurs. Avantageusement, chaque plot de suspension comprend au moins un organe de suspension. De manière avantageuse, cet organe de suspension peut comprendre un câble métallique par exemple formant un ressort, ou bien encore des pistons, ou plus généralement tout élément ou dispositif de rappel permettant d'absorber les vibrations mécaniques de la cuve de sorte à réduire la quantité de vibrations mécaniques transmises à la structure porteuse, voire à empêcher la transmission de ces vibrations mécaniques depuis la cuve vers la structure porteuse.

De manière particulièrement avantageuse et comme décrit par la suite, les plots de suspension supérieurs et inférieurs sont disposés et configurés de manière stratégique autour de la cuve, et de préférence stratégiquement les uns relativement aux autres, voire même en fonction de la position du moteur et/ou du système de chauffage.

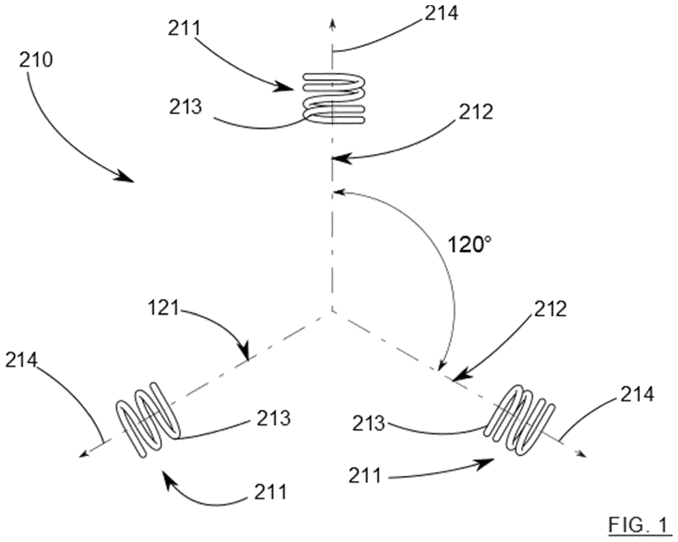

Les figures 1 à 7 vont être à présent décrites. Dans ces figures, la structure porteuse 140 ne comprend que six plots de suspension 200 dont trois plots de suspension supérieurs 220 et trois plots de suspensions inférieurs 210. Il est possible qu'un nombre différent de plots soit mis en oeuvre, par exemple plus de trois plots sur au moins un niveau, ou encore au moins trois plots sur un niveau et deux seulement sur l'autre ; les figures ne sont donc que des exemples non limitatifs d'un mode de réalisation.

Pour autant, le choix de trois plots sur un niveau donné s'avère avantageux en termes d'isostatisme. Les efforts peuvent être transmis par les suspensions de l'invention, sans pour autant recourir à un grand nombre de plots ou à des plots très rigides.

La structure à deux niveaux de suspension permet à la fois de bénéficier de cet effet d'isostatisme par niveau et d'un accroissement du nombre d'organes total, au-delà de trois, pour répartir l'amortissement. On évite ainsi un dimensionnement délicat si seulement trois organes de suspension au total étaient présents. Les sollicitations dues à d'éventuels mouvements de précession ou de nutation de la cuve sont aussi efficacement reprises par cette organisation en deux niveaux. Cela permet également d'éviter le basculement, appelé également renversement, de la cuve.

De préférence, le niveau inférieur est situé à proximité du fond de la cuve, de préférence sous la cuve, et pour le moins à un niveau de hauteur inférieur ou égal à 20 % de la hauteur globale du corps de la cuve. De préférence, le niveau supérieur est situé au niveau de, et dans tous les cas de préférence à proximité de, l'ouverture supérieure du corps de la cuve, et notamment à un niveau de hauteur supérieure ou égale à 80 % de la hauteur globale du corps de la cuve.

La figure 1 représente de manière schématique les plots de suspension inférieurs 210 selon un mode de réalisation de la présente invention, et en particulier leur positionnement les uns relativement aux autres.

Sur cette figure, on remarque trois plots de suspension inférieurs 210 répartis à équidistance angulaire, ici à 120°, les uns des autres. Chaque plot de suspension inférieur 210 comprend un organe de suspension 211 s'étendant selon un axe d'extension 212. Cet organe de suspension 211 peut par exemple être un câble métallique 213 conformé selon une forme hélicoïdale. Selon cet exemple, le câble métallique 213 s'étend alors selon un axe d'enroulage 214, de préférence colinéaire avec l'axe d'extension 212 de l'organe de suspension 211.

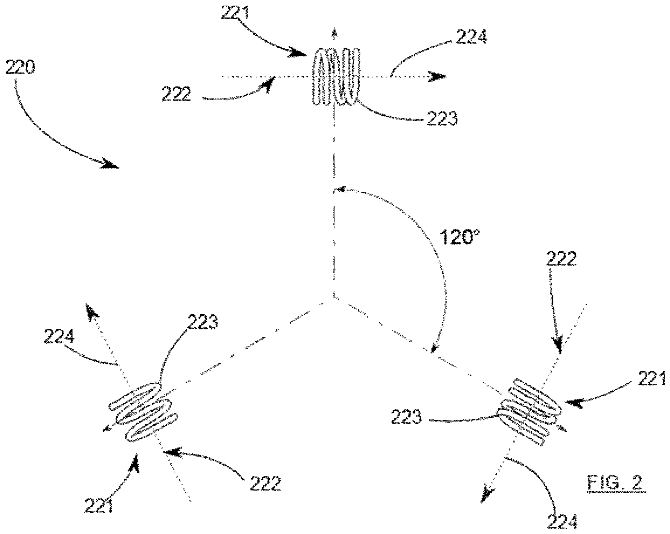

Sur la figure 2, sont schématiquement illustrés trois plots de suspension supérieurs 220. Sur cette figure, les trois plots de suspension supérieurs 220 sont répartis à équidistance angulaire, de préférence à 120°, les uns des autres. Chaque plot de suspension supérieur 220 comprend au moins un organe de suspension 221 s'étendant selon un axe d'extension 222. Comme précédemment, cet organe de suspension 221 peut par exemple être un câble métallique 223 conformé selon une forme hélicoïdale. Selon cet exemple, le câble métallique 223 s'étend alors selon un axe d'enroulage 224, de préférence colinéaire avec l'axe d'extension de l'organe de suspension 222.

On notera que de préférence, l'axe de déformation des organes de suspension 211, 221 se trouve selon leur axe d'extension 212, 222.

On notera également que, et cela sera plus clairement décrit et illustré par la suite, que chaque plot de suspension supérieur 220 est disposé à l'aplomb d'un plot de suspension inférieur 210, formant ainsi de paires de plots de suspension 230. De préférence chaque paire 230 de plots de suspension 200 comprend un plot de suspension supérieur 220 et un plot de suspension inférieur 210, le plot de suspension supérieur 220 étant disposé à l'aplomb du plot de suspension inférieur 210 de ladite paire de plots 230. Ainsi, selon un mode de réalisation préféré de la présente invention, et tel qu'illustré par la suite, le dispositif 100 de traitement de déchets comprend trois paires 230 de plots de suspension 200.

Selon un mode de réalisation, l'axe d'extension 222 de l'organe de suspension 221 du plot de suspension supérieur 220 d'une paire 230 est quelconque, de préférence non parallèle, relativement à l'axe d'extension 212 de l'organe de suspension 211 du plot de suspension inférieur 210 de ladite paire 230. De préférence, et tel qu'illustré par la suite, l'axe d'extension 222 de l'organe de suspension 221 du plot de suspension supérieur 220 d'une paire 230 est orthogonal à l'axe d'extension 212 de l'organe de suspension 211 du plot de suspension inférieur 210 de ladite paire 230. Le fait que ces axes d'extension 212 et 222 ne soient pas parallèles entre eux, voire même de préférence soient orthogonaux, permet une complémentarité entre chaque plot de suspension 210 et 220 d'une paire 230 dans l'absorption des vibrations mécaniques de la cuve 110.

Dans le mode de réalisation illustrée, les organes de suspension d'un niveau donné sont portés par un cercle, ce cercle étant avantageusement de plus grand diamètre que la cuve (dans sa partie de réception de déchets) à cet endroit. Ainsi, les organes de suspension s'organisent en cercles autour de la cuve, suivant deux cercles superposés. On verra ultérieurement que de saillies latérales, sous forme d'une couronne 113 ou de support de fixation 115 pour coopérer avec les organes de suspension.

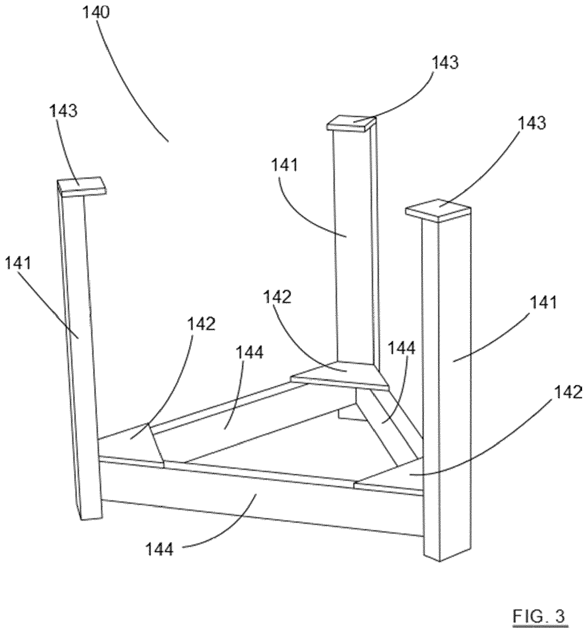

La figure 3 représente, selon un mode de réalisation de la présente invention, une structure porteuse 140. Sur cette figure, la structure porteuse 140 comprend trois potences 141. Les potences 141 peuvent être des profils métalliques, le reste de la structure porteuse 140 pouvant d'ailleurs être métallique. Une extrémité inférieure des potences sert d'appui sur le sol dans le cas représenté aux figures.

De préférence la structure porteuse 140 comprend autant de potences 141 que le dispositif 100 comprend de paires de plots 230. Avantageusement, chaque potence 141 comprend au moins deux bases de liaison 142 et 143, une pour chaque niveau de plots de suspension 200. Ainsi chaque potence 141 comprend une base de liaison inférieure 142 et une base de liaison supérieure 143. Les bases 143 servent de platines pour fixer les organes de suspension ; leur face supérieure peut-être horizontale, c'est-à-dire dirigée perpendiculairement à l'axe de rotation du broyeur au repos.

Un mode de réalisation pratique consiste à former la structure porteuse 140 à partir d'éléments métalliques organisés en structure tridimensionnelle mécano soudée.

On remarquera que les potences 141 sont de préférence mécaniquement solidaires les unes des autres au travers d'éléments de solidarisation 144 reprenant les efforts transverses, permettant également un renforcement mécanique de la structure porteuse 140.

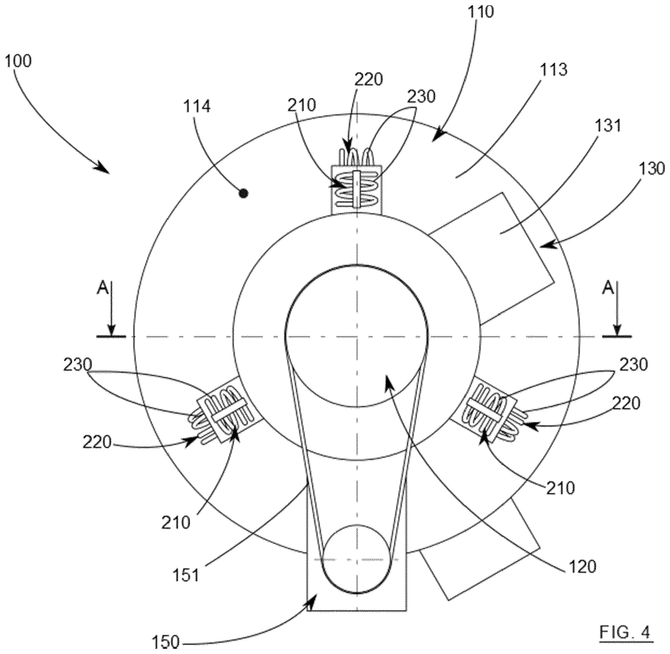

La figure 4 représente une vue de dessous d'une cuve 110 selon la présente invention. Sur cette figure sont représentés le moteur 150 mécaniquement couplé au broyeur 120 au travers d'une courroie d'entraînement 151, ainsi que le système de chauffage 130, les plots de suspensions supérieurs 220 et les plots de suspension inférieurs 210.

Comme précédemment indiqué, chaque paire 230 de plots de suspension 200 présente un organe de suspension 211, 221 s'étendant selon une direction orthogonale à la direction d'extension de l'autre organe de suspension de ladite paire 230.

On remarque sur cette figure que selon un mode de réalisation, les plots de suspension supérieurs 220 sont plus éloignés de l'axe longitudinal 111 de la cuve 110 que les plots de suspension inférieurs 210. Le poids étant sensiblement plus important au niveau des plots de suspension inférieurs 210, leur rapprochement de l'axe de rotation 122 de la lame rotative 121, confondu avec l'axe longitudinal 111 de la cuve 110, permet une meilleure absorption des vibrations mécaniques, ainsi que de réduire l'amplitude desdites vibrations.

On remarque également que, selon un mode de réalisation préféré de la présente invention, une paire 230 de plots de suspension 200 est disposée à l'opposé du moteur 150 par rapport à l'axe longitudinal 111 de la cuve 110.

Avantageusement, et selon un mode de réalisation préféré de la présente invention, une paire 230 de plots de suspension 200 est disposée à l'opposé du système de chauffage 130 par rapport à l'axe longitudinal 111 de la cuve 110.

Ce positionnement d'une paire 230 de plots de suspension à l'opposé du moteur 150 permet de compenser le déplacement du centre de gravité de la cuve 110 du fait qu'elle supporte ledit moteur 150. Il en est de même pour ce qui concerne le système de chauffage 130.

Selon un mode de réalisation particulièrement avantageux, la paire 230 de plots de suspension 200 disposée à l'opposé du moteur comprend un plot de suspension supérieur 220 présentant un coefficient de raideur différent, de préférence supérieur, aux coefficients de raideur des deux autres plots de suspension supérieurs 220, et/ou un plot de suspension inférieur 210 présentant un coefficient de raideur différent, de préférence supérieur, aux coefficients de raideur des deux autres plots de suspension inférieurs 210. Cela contribue à contrebalancer le déplacement du centre de gravité de la cuve 110 causé par la présence du moteur 150 et/ou du système de chauffage 130.

Selon un mode de réalisation particulièrement avantageux, la configuration du câble métallique 213 de l'organe de suspension 211 du plot de suspension inférieur 210 disposé à l'opposé du moteur 150 par rapport à la cuve 100 est différente de celle des deux autres plots de suspension inférieurs 210. En effet, on notera que pour cet organe de suspension 211, en particulier le nombre de spires formées par le câble métallique 213, est différent, de préférence inférieur, au nombre de spires formées par les deux autres câbles métalliques 213. Il en est de même pour les plots de suspension supérieurs 220.

Selon un mode de réalisation, la conformation des câbles métalliques 213, 223, de préférence le nombre de spires, voire leur répartition le long de l'axe d'extension 212, 222 de l'organe de suspension 211, 221 considéré, définit en partie au moins la constante de raideur de l'organe de suspension 211, 221 considéré. De préférence, le diamètre des câbles métalliques 213, 223 ou encore leur nature chimique peuvent également influencer leur constante de raideur.

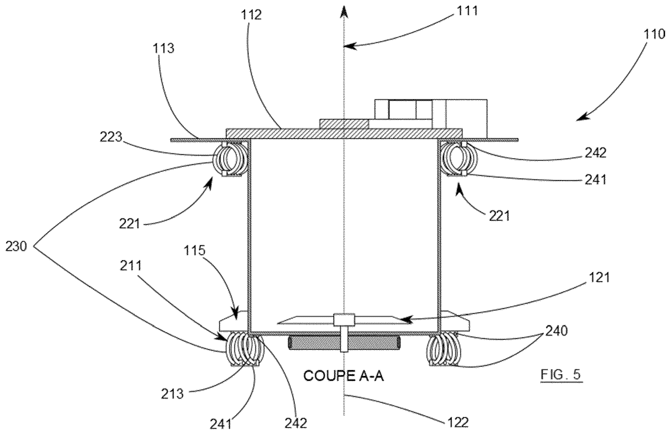

La figure 5 représente une vue en coupe de la cuve 110 et des plots de suspension 200 selon un mode de réalisation de la présente invention.

Sur cette figure, la lame rotative 121 est configurée pour broyer les déchets dans la cuve 110 en tournant autour de son axe de rotation 122, de préférence confondu avec l'axe longitudinal 111 de la cuve 110.

On note que de manière avantageuse, la lame rotative 121 est disposée au fond de la cuve 110, de préférence au centre du fond de la cuve 110.

On notera que la cuve 110 présente un couvercle 112.

Sur cette figure, et selon un mode de réalisation de la présente invention, la cuve 110 comprend une couronne 113. On note que les plots de suspension supérieurs 220 sont mécaniquement solidaires de la cuve 110, de préférence via cette couronne 113. En effet, les plots de suspension supérieurs 220 sont de préférence solidaires de la face inférieure 114 de la couronne 113 de la cuve 110.

Les plots de suspension supérieurs 220 comprennent des guides de liaison 240 configurés pour solidariser l'organe de suspension 221, ici le câble métallique 223 de forme hélicoïdale, avec la cuve 110 et avec la structure porteuse 140, en particulier avec une base de liaison supérieure 143 de la structure porteuse 140. Il en est de même pour les plots de suspension inférieurs 210.

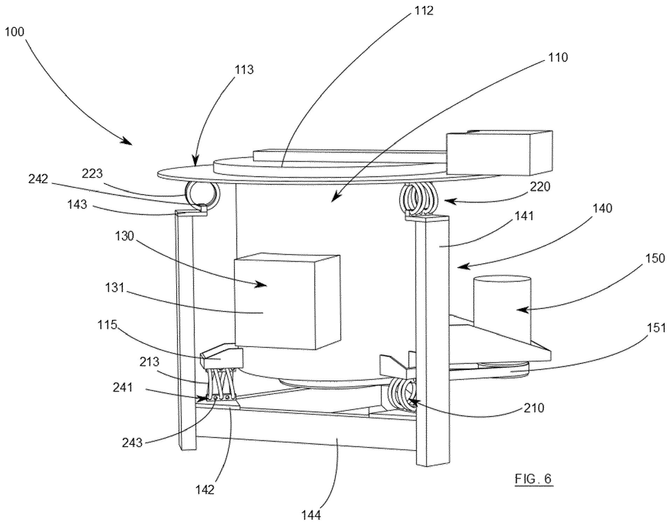

La figure 6 représente plus globalement un dispositif 100 de traitement de déchets comprenant une cuve 110 supportant un système de chauffage 130, un broyeur 120, un moteur 150 et étant supportée par une structure porteuse 140 au travers d'une pluralité de plots de suspension supérieurs 220 et inférieurs 210.

Sur cette figure, les plots de suspensions 200 sont montés solidaire de la structure porteuse 140 et de la cuve 110 par des guides de liaison. En particulier, chaque plot de suspension 200 est solidaire de la structure porteuse via un guide de liaison inférieur. De même, chaque plot de suspension 200 est solidaire de la cuve via un guide de liaison supérieur 242.

On notera que les plots de suspension supérieurs 220 sont dans ce cas solidaires de la cuve 110 au niveau de la couronne 113, de préférence de la surface inférieure 114 de la couronne 113, et que les plots de suspension inférieurs sont solidaires de la cuve 110 au niveau du support de fixation 115.

Avantageusement, chaque plot de suspension supérieur 220 est solidaire de la surface inférieure 114 de la couronne 113 par un guide de liaison supérieur 242.

Avantageusement, chaque plot de suspension inférieur 210 est solidaire d'un support de liaison 115 par un guide de liaison supérieur 242. Le support de liaison 115 est par exemple formé d'une patte métallique faisant saillie radialement sur la paroi latérale de la cuve. En section transversale, elle peut avoir une forme de U. Éventuellement, ces supports peuvent être rapportés par soudage sur la face extérieure de la cuve.

On note la présence d'un couvercle 112 en position fermé sur cette figure.

Le couvercle 112 est avantageusement disposé à l'opposé du broyeur 120 relativement à la cuve 110 ; il ferme une embouchure supérieure de la cuve.

Le moteur 150 est intégralement porté par la cuve 110. Selon ce mode de réalisation, une paire 230 de plots de suspension est disposée de l'autre côté de la cuve 110 de sorte à compenser le déséquilibre mécanique généré par la présence du moteur 150 sur la cuve 110. De préférence, les raideurs des deux plots de suspension 200 de ladite paire 230 de plots de suspension 200 sont plus élevées que celle d'au moins un de préférence des autres plots de suspension des autres paires. Cela permet également de compenser le déplacement du centre de gravité de la cuve 110 généré par la position du moteur 150.

On notera que le même raisonnement peut s'appliquer à l'identique pour ce qui concerne la paire 230 de plots de suspension 200 disposée de l'autre côté de la cuve 110 par rapport au système de chauffage 130.

Avantageusement, la paire 230 de plots de suspension 200 ayant les raideurs les plus élevées correspond à la paire 230 de plots de suspension 200 diamétralement opposée à l'élément le plus lourd supporté par la cuve 110, par exemple pris parmi au moins le moteur 150 et le système de chauffage 130.

De préférence, les raideurs des plots sont choisies pour que l'ensemble supporté soit disposé, au repos, pour que l'axe de rotation du broyeur soit dirigé verticalement.

Selon un mode de réalisation préféré, et tel qu'illustré, les trois paires 230 de plots de suspension 200 sont réparties à 120 degrés autour de la cuve 110 qui présente une forme cylindrique.

De manière particulièrement avantageuse, les plots de suspension inférieurs 210 de chaque paire 230 de plots de suspension 200 peuvent présenter une constante de raideur différente, et de préférence supérieure, à celle des plots de suspension supérieurs 220 de chaque paire 230 de plots de suspension 200. Les déchets étant disposés au fond de la cuve 110 avec la lame rotative 121, les vibrations mécaniques les plus importantes se situent au niveau du fond de la cuve 110. Ainsi, disposer à ce niveau des plots de suspensions inférieurs 210 ayant des constantes de raideur différentes, de préférence supérieures, à celle des plots de suspension supérieurs 220 permet de réduire efficacement la transmission des vibrations mécaniques au reste du dispositif 100. Une position des plots de suspension inférieurs 210 plus proche de l'axe de rotation 122 de la lame rotative 121 que la position des plots de suspension supérieurs 220 contribue également à cet effet.

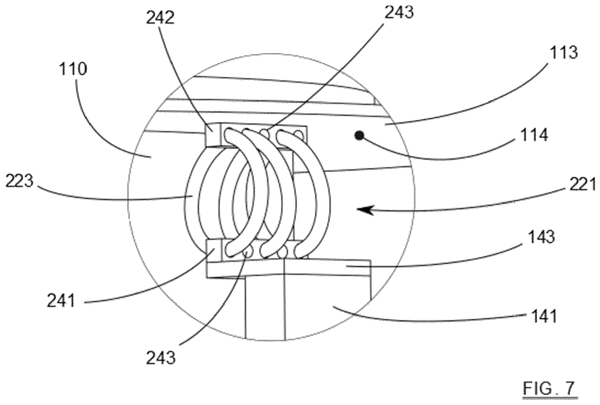

La figure 7 illustre un organe de suspension 200 comprenant un câble métallique 213, 223 conformé en forme hélicoïdale. Cet organe de suspension comprend un guide de liaison supérieur 243 et un guide de liaison inférieur 242. Les guides peuvent être des barrettes, notamment métallique, servant d'interface entre le câble et l'élément sur lequel l'organe est à rapporter. On notera que le guide de liaison inférieur 242 et le guide de liaison supérieur 243 comprennent chacun une pluralité d'orifices. De préférence, le câble métallique 213, 223 traverse alternativement un orifice 243 de la pluralité d'orifices du guide de liaison supérieur 242 et un orifice 243 de la pluralité d'orifices du guide de liaison inférieur 241. Cette alternance lui donne de préférence une forme hélicoïdale. En effet, de manière particulièrement avantageuse, la forme hélicoïdale du câble métallique 213, 223 est obtenue en disposant le câble métallique 213, 223 dans les orifices 243 des guides de liaison supérieur 242 et inférieur 241.

Selon un mode de réalisation, en fonction des orifices 243 de chaque guide de liaison 241, 242 traversés, le nombre de spires formées par le câble métallique 213, 223, et ainsi la constante de raideur de l'organe de suspension 211, 221, peuvent être modifiée.

De manière avantageuse, en ajustant la suite d'orifices traversés par le câble métallique, la constante de raideur de l'organe de suspension est ajustée
Dans l'exemple donné, les câbles des organes de suspension sont sollicités essentiellement en compression lors de la reprise du poids de la cuve et des organes que porte cette dernière. Ainsi sollicités, l'hélice que forment les câbles peut être ovalisée sous l'effet d'une compression et reprendre sa forme normale sans sollicitation. La forme d'hélice assure par ailleurs un comportement relativement isotrope de cette partie d'amortissement élastique ; on entend par là que des sollicitations transverses, notamment dues à un balourd lors d'une face de broyage, peuvent aussi être reprises par les organes de suspension, aussi bien que les efforts verticaux gravitaires.

L'invention n'est pas limitée aux modes de réalisations précédemment décrits et s'étend à tous les modes de réalisation couverts par les revendications.

### LISTE DES REFERENCES

- 100: Dispositif de traitement de déchets
- 110: Cuve
- 111: Axe longitudinal de la cuve
- 112: Couvercle
- 113: Couronne
- 114: Surface inférieure de la couronne
- 115: Support de fixation
- 120: Broyeur
- 121: Lame rotative
- 122: Axe de rotation de la lame rotative
- 130: Système de chauffage
- 131: Générateur de micro-ondes
- 140: Structure porteuse
- 141: Potence
- 142: Base de liaison inférieure
- 143: Base de liaison supérieure
- 144: Elément de solidarisation
- 150: Moteur
- 151: Courroie d'entraînement
- 200: Plots de suspension
- 210: Plots de suspension inférieurs
- 211: Organe de suspension des plots de suspension inférieurs
- 212: Axe d'extension des plots de suspension inférieurs
- 213: Câble métallique
- 214: Deuxième axe d'enroulement
- 220: Plots de suspension supérieurs
- 221: Organe de suspension des plots de suspension supérieurs
- 222: Axe d'extension des plots de suspension supérieurs
- 223: Câble métallique
- 224: Premier axe d'enroulement
- 230: Paire de plots
- 240: Guide de liaison
- 241: Guide de liaison inférieur
- 242: Guide de liaison supérieur
- 243: Orifices

## Revendications

1. Dispositif (100) de traitement de déchets, en particulier de banalisation de déchets d'activités de soins à risques infectieux, comprenant une cuve (110) destinée à être alimentée en déchets, un broyeur (120) de déchets monté en partie au moins à l'intérieur de la cuve (110), un système de chauffage (130) des déchets en vue de leur désinfection, et une structure porteuse (140), **caractérisé en ce que** la cuve (110) est suspendue à la structure porteuse (140) par des plots de suspension (200, 210, 220) configurés pour supporter la cuve (110), la structure porteuse (140) comprenant :
- au moins trois plots de suspension supérieurs (220) comprenant chacun au moins un organe de suspension (221), étant répartis à équidistance angulaire les uns des autres autour de la cuve (110) et étant reliés à la cuve (110) à un premier niveau en hauteur de la cuve (110);
- au moins trois plots de suspension inférieurs (210) comprenant chacun au moins un organe de suspension (211), étant répartis à équidistance angulaire les uns des autres autour de la cuve (110) et étant reliés à la cuve (110) à un deuxième niveau en hauteur de la cuve (110), différent du premier niveau.

2. Dispositif (100) selon la revendication précédente, dans lequel chacun des plots de suspension supérieurs (220) est disposé au-dessus d'un des plots de suspension inférieurs (210) définissant des paires (230) de plots de suspension (200, 210, 220), chaque paire (230) de plots de suspension (200, 210, 220) étant formée d'un plot de suspension supérieur (220) et d'un plot de suspension inférieur (210), le plot de suspension supérieur (220) étant disposé au-dessus du plot de suspension inférieur (210).

3. Dispositif (100) selon la revendication précédente dans lequel le plot de suspension supérieur (220) et le plot de suspension inférieur (210) de chaque paire (230) de plots de suspension (200, 210, 220) s'étendent chacun selon un axe d'extension (212, 222) différent, de préférence orthogonal l'un par rapport à l'autre.

4. Dispositif (100) selon l'une quelconque des revendications précédentes dans lequel la cuve (110) comprend un axe longitudinal (111) et dans lequel les plots de suspension supérieurs (220) sont plus éloignés de l'axe longitudinal (111) de la cuve (110) que les plots de suspension inférieurs (210).

5. Dispositif (100) selon l'une quelconque des revendications précédentes, dans lequel l'au moins un organe de suspension (221) de chacun des plots de suspension supérieurs (220) comprend au moins un câble métallique (223).

6. Dispositif (100) selon la revendication précédente dans lequel le câble métallique (223) présente une forme hélicoïdale s'étendant selon un premier axe d'enroulement (224), et de préférence dans lequel la cuve (110) comprend un axe longitudinal (111) et dans lequel le premier axe d'enroulement (224) est orthogonal à l'axe longitudinal de la cuve (111).

7. Dispositif (100) selon l'une quelconque des revendications précédentes, dans lequel l'au moins un organe de suspension (211) de chacun des plots de suspension inférieurs (210) comprend au moins un câble métallique (213).

8. Dispositif (100) selon la revendication précédente dans lequel le câble métallique (213) présente une forme hélicoïdale s'étendant selon un deuxième axe d'enroulement (214), et de préférence dans lequel la cuve (110) comprend un axe longitudinal (111) et dans lequel le deuxième axe d'enroulement (214) est orthogonal à l'axe longitudinal (111) de la cuve (110).

9. Dispositif (100) selon la revendication précédente dans lequel le deuxième axe d'enroulement (214) s'étend radialement relativement à l'axe longitudinal (111) de la cuve (110).

10. Dispositif (100) selon l'une quelconque des revendications précédentes dans lequel un plot de suspension supérieur (220) parmi les trois plots de suspension supérieurs (220) présente une constante de raideur différente des constantes de raideur des autres plots de suspension supérieurs (220), et de préférence dans lequel le rapport entre la constante de raideur respectivement verticale et horizontale dudit plot de suspension supérieur (220) parmi les trois plots de suspension supérieurs (220) et les constantes de raideur respectivement verticales et horizontales desdits autres plots de suspension supérieurs (220) est supérieur à 1, de préférence à 1.25, et avantageusement à 1.3.

11. Dispositif (100) selon l'une quelconque des revendications précédente dans lequel un plot de suspension inférieur (210) parmi les trois plots de suspension inférieurs (210) présente une constante de raideur différente des constantes de raideur des autres plots de suspension inférieurs (210), et de préférence dans lequel le rapport entre la constante de raideur respectivement verticale et horizontale dudit plot de suspension inférieur (210) parmi les trois plots de suspension inférieurs (210) et les constantes de raideur respectivement verticales et horizontales desdits autres plots de suspension inférieurs (210) est supérieur à 1, de préférence à 1.25, et avantageusement à 1.3.

12. Dispositif (100) selon l'une quelconque des revendications précédentes en combinaison avec les revendications 10 et 11, comprenant un moteur (150) configuré pour actionner ledit broyeur (120) et destiné à être supporté par ladite cuve (110), ledit moteur (150) étant diamétralement opposé à au moins l'un parmi les trois plots de suspension supérieurs (220) et les trois plots de suspension inférieurs (210), de préférence opposé à un plot de suspension supérieur (220) ayant une constante de raideur différente desdits autres plots de suspension supérieurs (220) et/ou à un plot de suspension inférieur (210) ayant une constante de raideur différente desdits autres plots de suspension inférieurs (210).

13. Dispositif (100) selon l'une quelconque des revendications précédentes dans lequel les constantes de raideur des organes de suspension (211, 221) des plots de suspension supérieurs (220) et des plots de suspension inférieurs (210) sont configurées pour que la fréquence de résonnance de chaque organe de suspension (211, 221) soit différente de la fréquence de vibration de la cuve (110) lorsque le broyeur (120) de déchets est actif.

14. Dispositif (100) selon l'une quelconque des revendications précédentes dans lequel chaque plot de suspension (200, 210, 220) comprend au moins un guide de liaison inférieur (241) et un guide de liaison supérieur (242) comprenant chacun une pluralité d'orifices (243) destinés à accueillir en partie au moins un câble métallique (213, 223) formant en partie au moins ledit organe de suspension (211, 221), et de préférence dans lequel le guide de liaison supérieur (242) est solidaire à une partie au moins de la cuve (110) et dans lequel le guide de liaison inférieur (241) est solidaire à une partie au moins de la structure porteuse (140).

15. Dispositif (100) selon la revendication précédente dans lequel la configuration du câble métallique (213, 223) dans la pluralité d'orifices (243) définit en partie au moins la constante de raideur de l'organe de suspension (211, 221).

## Patentansprüche

1. Vorrichtung (100) zur Verarbeitung von Abfällen, vor allem zur Sicherung von Abfällen von Behandlungsaktivitäten mit Infektionsrisiken, umfassend einen Behälter (110), der zur Versorgung mit Abfällen bestimmt ist, einen Abfallzerkleinerer (120), der mindestens zum Teil im Inneren des Behälters (110) angebracht ist, ein System (130) zum Erwärmen der Abfälle im Hinblick auf deren Desinfektion und eine tragende Struktur (140), **dadurch gekennzeichnet, dass** der Behälter (110) mittels Aufhängungselementen (200, 210, 220) an der tragenden Struktur (140) aufgehängt ist, die dazu ausgelegt sind, den Behälter (110) zu halten, wobei die tragende Struktur (140) umfasst:
- Mindestens drei obere Aufhängungselemente (220), die jeweils mindestens ein Aufhängungsorgan (221) umfassen, in gleicher Winkelentfernung voneinander um den Behälter (110) verteilt sind und mit dem Behälter (110) in einem ersten Höhenniveau des Behälters (110) verbunden sind;
- mindestens drei untere Aufhängungselemente (210), die jeweils mindestens ein Aufhängungsorgan (211) umfassen, in gleicher Winkelentfernung voneinander um den Behälter (110) verteilt sind und mit dem Behälter (110) in einem zweiten Höhenniveau des Behälters (110) verbunden sind, das vom ersten Niveau verschieden ist.

2. Vorrichtung (100) nach vorangehendem Anspruch, wobei jedes von den oberen Aufhängungselementen (220) oberhalb von einem der unteren Aufhängungselemente (210) angeordnet ist, die Paare (230) von Aufhängungselementen (200, 210, 220) bilden, wobei jedes Paar (230) von Aufhängungselementen (200, 210, 220) von einem oberen Aufhängungselement (220) und von einem unteren Aufhängungselement (210) gebildet ist, wobei das obere Aufhängungselement (220) oberhalb des unteren Aufhängungselements (210) angeordnet ist.

3. Vorrichtung (100) nach vorangehendem Anspruch, wobei sich das obere Aufhängungselement (220) und das untere Aufhängungselement (210) jedes Paars (230) von Aufhängungselementen (200, 210, 220) jeweils gemäß einer verschiedenen, vorzugsweise zueinander orthogonalen Erstreckungsachse (212, 222) erstrecken.

4. Vorrichtung (100) nach einem der vorangehenden Ansprüche, wobei der Behälter (110) eine Längsachse (111) umfasst und wobei die oberen Aufhängungselemente (220) von der Längsachse (111) des Behälters (110) weiter als die unteren Aufhängungselemente (210) entfernt sind.

5. Vorrichtung (100) nach einem der vorangehenden Ansprüche, wobei das mindestens eine Aufhängungsorgan (221) von jedem der oberen Aufhängungselemente (220) mindestens ein Metallkabel (223) umfasst.

6. Vorrichtung (100) nach vorangehendem Anspruch, wobei das Metallkabel (223) eine Schraubenform aufweist, die sich gemäß einer ersten Wickelachse (224) erstreckt, und wobei vorzugsweise der Behälter (110) eine Längsachse (111) umfasst und wobei die erste Wickelachse (224) zur Längsachse des Behälters (111) orthogonal ist.

7. Vorrichtung (100) nach einem der vorangehenden Ansprüche, wobei das mindestens eine Aufhängungsorgan (211) jedes der unteren Aufhängungselemente (210) mindestens ein Metallkabel (213) umfasst.

8. Vorrichtung (100) nach vorangehendem Anspruch, wobei das Metallkabel (213) eine Schraubenform aufweist, die sich gemäß einer zweiten Wickelachse (214) erstreckt, und wobei vorzugsweise der Behälter (110) eine Längsachse (111) umfasst und wobei die zweite Wickelachse (214) zur Längsachse (111) des Behälters (110) orthogonal ist.

9. Vorrichtung (100) nach vorangehendem Anspruch, wobei sich die zweite Wickelachse (214) radial relativ zur Längsachse (111) des Behälters (110) erstreckt.

10. Vorrichtung (100) nach einem der vorangehenden Ansprüche, wobei ein oberes Aufhängungselement (220) der drei oberen Aufhängungselemente (220) eine Federkonstante aufweist, die von den Federkonstanten der anderen oberen Aufhängungselemente (220) verschieden ist und wobei vorzugsweise das Verhältnis zwischen der jeweils vertikalen und horizontalen Federkonstante des oberen Aufhängungselements (220) der drei oberen Aufhängungselemente (220) und der jeweils vertikalen und horizontalen Federkonstante der anderen oberen Aufhängungselemente (220) größer als 1, vorzugsweise als 1,25 und in vorteilhafter Weise als 1,3 ist.

11. Vorrichtung (100) nach einem der vorangehenden Ansprüche, wobei ein unteres Aufhängungselement (210) der drei unteren Aufhängungselemente (210) eine Federkonstante aufweist, die von den Federkonstanten der anderen unteren Aufhängungselemente (210) verschieden ist und wobei vorzugsweise das Verhältnis zwischen der jeweils vertikalen und horizontalen Federkonstante des unteren Aufhängungselements (210) der drei unteren Aufhängungselemente (210) und der jeweils vertikalen und horizontalen Federkonstante der anderen unteren Aufhängungselemente (210) größer als 1, vorzugsweise als 1,25 und in vorteilhafter Weise als 1,3 ist.

12. Vorrichtung (100) nach einem der vorangehenden Ansprüche in Kombination mit den Ansprüchen 10 und 11, umfassend einen Motor (150), der dazu ausgelegt ist, den Zerkleinerer (120) zu betätigen und bestimmt ist, von dem Behälter (110) getragen zu werden, wobei der Motor (150) mindestens einem von den drei oberen Aufhängungselementen (220) und den drei unteren Aufhängungselementen (210) diametral gegenüberliegt, vorzugsweise einem oberen Aufhängungselement (220) gegenüber mit einer Federkonstante, die von den anderen oberen Aufhängungselementen (220) verschieden ist und/oder einem unteren Aufhängungselement (210) mit einer Federkonstante, die von den anderen unteren Aufhängungselementen (210) verschieden ist.

13. Vorrichtung (100) nach einem der vorangehenden Ansprüche, wobei die Federkonstanten der Aufhängungsorgane (211, 221) der oberen Aufhängungselemente (220) und der unteren Aufhängungselemente (210) dazu ausgelegt sind, damit die Resonanzfrequenz jedes Aufhängungsorgans (211, 221) von der Vibrationsfrequenz des Behälters (110) verschieden ist, wenn der Abfallzerkleinerer (120) aktiv ist.

14. Vorrichtung (100) nach einem der vorangehenden Ansprüche, wobei jedes Aufhängungselement (200, 210, 220) mindestens eine untere Verbindungsführung (241) und eine obere Verbindungsführung (242) umfasst, die jeweils eine Vielzahl von Öffnungen (243) umfasst, die zur mindestens teilweisen Aufnahme eines Metallkabels (213, 223) bestimmt sind, das mindestens zum Teil das Aufhängungsorgan (211, 221) bildet, und wobei vorzugsweise die obere Verbindungsführung (242) mit mindestens einem Teil des Behälters (110) fest verbunden ist und wobei die untere Verbindungsführung (241) mit mindestens einem Teil der tragenden Struktur (140) fest verbunden ist.

15. Vorrichtung (100) nach vorangehendem Anspruch, wobei die Konfiguration des Metallkabels (213, 223) in der Vielzahl von Öffnungen (243) mindestens zum Teil die Federkonstante des Aufhängungsorgans (211, 221) definiert.

## Claims

1. Device (100) for treating waste, in particular for treating waste from care activities with infectious risks, comprising a vessel (110) intended to be supplied with waste, a waste grinder (120) mounted at least partly inside the vessel (110), a system (130) for heating the waste with a view to disinfection thereof, and a carrier structure (140), **characterised in that** the vessel (110) is suspended on the carrier structure (140) by suspension studs (200, 210, 220) configured to support the vessel (110), the carrier structure (140) comprising:
- at least three top suspension studs (220) each comprising at least one suspension member (221), being distributed at equal angular distances from one another around the vessel (110) and being connected to the vessel (110) at a first height level of the vessel (110);
- at least three bottom suspension studs (210) each comprising at least one suspension member (211), being distributed at equal angular distances from one another around the vessel (110) and being connected to the vessel (110) at a second height level of the vessel (110), different from the first level.

2. Device (100) according to the preceding claim, wherein each of the top suspension studs (220) is disposed above one of the bottom suspension studs (210) defining pairs (230) of suspension studs (200, 210, 220), each pair (230) of suspension studs (200, 210, 220) being formed by a top suspension stud (220) and a bottom suspension stud (210), the top suspension stud (220) being disposed above the bottom suspension stud (210).

3. Device (100) according to the preceding claim, wherein the top suspension stud (220) and the bottom suspension stud (210) of each pair (230) of suspension studs (200, 210, 220) each extend along a different extension axis (212, 222), preferably orthogonal with respect to each other.

4. Device (100) according to any one of the preceding claims, wherein the vessel (110) comprises a longitudinal axis (111) and wherein the top suspension studs (220) are further away from the longitudinal axis (111) of the vessel (110) than the bottom suspension studs (210).

5. Device (100) according to any one of the preceding claims, wherein the at least one suspension member (221) of each of the top suspension studs (220) comprises at least one metal cable (223).

6. Device (100) according to the preceding claim, wherein the metal cable (223) has a helical form extending along a first coiling axis (224), and preferably wherein the vessel (110) comprises a longitudinal axis (111) and wherein the first coiling axis (224) is orthogonal to the longitudinal axis of the vessel (111).

7. Device (100) according to any one of the preceding claims, wherein the at least one suspension member (211) of each of the bottom suspension studs (210) comprises at least one metal cable (213).

8. Device (100) according to the preceding claim, wherein the metal cable (213) has a helical form extending along a second coiling axis (214), and preferably wherein the vessel (110) comprises a longitudinal axis (111) and wherein the second coiling axis (214) is orthogonal to the longitudinal axis (111) of the vessel (110).

9. Device (100) according to the preceding claim, wherein the second coiling axis (214) extends radially in relation to the longitudinal axis (111) of the vessel (110).

10. Device (100) according to any one of the preceding claims, wherein a top suspension stud (220) from the three top suspension studs (220) has a stiffness constant different from the stiffness constants of the other top suspension studs (220), and preferably wherein the ratio between the respectively vertical and horizontal stiffness constants of said top suspension stud (220) from the three top suspension studs (220) and the respectively vertical and horizontal stiffness constants of said other top suspension studs (220) are greater than 1, preferably greater than 1.25, and advantageously greater than 1.3.

11. Device (100) according to any one of the preceding claims, wherein a bottom suspension stud (210) from the three bottom suspension studs (210) has a stiffness constant different from the stiffness constants of the other bottom suspension studs (210), and preferably wherein the ratio between the respectively vertical and horizontal stiffness constants of said bottom suspension stud (210) from the three bottom suspension studs (210) and the respectively vertical and horizontal stiffness constants of said other bottom suspension studs (210) are greater than 1, preferably greater than 1.25, and advantageously greater than 1.3.

12. Device (100) according to any one of the preceding claims in combination with claims 10 and 11, comprising a motor (150) configured to actuate said grinder (120) and intended to be supported by said vessel (110), said motor (150) being diametrically opposed to at least one from the three top suspension studs (220) and the three bottom suspension studs (210), preferably opposite to a top suspension stud (220) having a stiffness constant different from said other top suspension studs (220) and/or to a bottom suspension stud (210) having a stiffness constant different from said other bottom suspension studs (210).

13. Device (100) according to any one of the preceding claims, in which the stiffness constants of the suspension members (211, 221) of the top suspension studs (220) and of the bottom suspension studs (210) are configured so that the resonant frequency of each suspension member (211, 221) is different from the vibration frequency of the vessel (110) when the waste grinder (120) is active.

14. Device (100) according to any one of the preceding claims, wherein each suspension stud (200, 210, 220) comprises at least one bottom connection guide (241) and one top connection guide (242) each comprising a plurality of orifices (243) intended to at least partly accommodate one metal cable (213, 223) at least partly forming said suspension member (211, 221), and preferably wherein the top connection guide (242) is secured to at least a part of the vessel (110) and wherein the bottom connection guide (241) is secured to at least a part of the carrier structure (140 and).

15. Device (100) according to the preceding claim, wherein the configuration of the metal cable (213, 223) in the plurality of orifices (243) at least partly defines the stiffness constant of the suspension member (211, 221).
